# EUROPEAN PATENT SPECIFICATION

(11) **EP 1 569 487 B1**
(45) Date of publication and mention of the grant of the patent: **27.01.2010**
(21) Application number: 04251153.5
(22) Date of filing: 27.02.2004
(51) Int. Cl.: H04W 68/06

(54) **Intelligent paging in multiple networks**
Intelligentes Funkrufverfahren in mehreren Netzwerken
Procédé intelligent de téléappel avec plusiers réseaux

(43) Date of publication of application: 31.08.2005
(73) Proprietor: Research In Motion Limited, Waterloo, Ontario N2L 3W8 (CA)
(72) Inventor: Munje, Arun, Kanata, Ontario K2W 1E3 (CA)
(74) Representative: MERH-IP Matias Erny Reichl Hoffmann

(56) References cited:
- EP-A- 0 851 703
- WO-A-2004/010725
- AKYLDIZ I F ET AL: "A DYNAMIC LOCATION MANAGEMENT SCHEME FOR NEXT-GENERATION MULTITIER PCS SYSTEMS" IEEE TRANSACTIONS ON WIRELESS COMMUNICATIONS, IEEE, PISCATAWAY, US, vol. 1, no. 1, January 2002 (2002-01), pages 178-189, XP001143815 ISSN: 1536-1276

## Description

The invention relates to wireless communication systems and more particularly to paging in wireless communication systems having multiple networks.

In wireless communication systems which provide two or more different services, if the services are sufficiently dissimilar, a substantially independent network is provided for each service, resulting in a system with multiple networks. An example of a system providing multiple services is the iDEN™ system of Motorola™ which provides dispatch services including push-to-talk™ (PTT™), and interconnect services for regular phone call services. Although independent in the sense that they provide different services, the networks of a multiple network system may share various hardware and software resources as required. For example, in the iDEN™ system, the dispatch network providing the dispatch services and the interconnect network providing GSM-like telephone services share EBTSs (Enhanced Base Transceiver Stations), cells, and various other resources.

Paging mobile devices registered on a network but idle when paged uses network resources. If the location of a mobile device were completely unknown, in order to ensure that the mobile device is paged, all of the cells of the entire network (from which the page originated) would be used to page the mobile device. This uses valuable network resources.

To increase mobile device paging efficiency, typically for each network in a wireless communication system, cells are grouped into logical areas. The mobile device and the network tracks the particular area(s) in which the mobile device is or most recently was located by having the mobile device update, in the network, a log of the mobile's location whenever it crosses into a new logical area. When a page over a service associated with a particular network is to be transmitted, only those cells in the area in which the mobile device is most likely located are paged, efficiently ensuring a level of certainty that the mobile device is paged. The cost of paging a mobile device which is registered on a network but is idle when paged, is reduced because not all of the cells of the network are used to page the mobile device. Moreover, since the mobile device updates the network of the logical area into which it crosses every time it crosses a logical area boundary, having a logical area made up of one cell is wasteful of both network resources and the mobile device's battery. Accordingly, a logical area of a size less than the entire network but larger than a single cell is typical.

PCT International Publication No. WO 2004/010725 and European Patent Application No. 0,851,703 disclose methods related to paging in mobile communications systems; however, in both of these references paging is done on a single cell basis, and as discussed above this is wasteful of both network resources and mobile device batteries. Another document entitled "A Dynamic Location Management Scheme for Next-Generation Multitier PCS Systems" (IEEE Transactions on Wireless Communications, col. 1, number 1, January 2002, Akyildiz et al.) discloses a method of reducing the signaling costs caused by intersystem paging. This is achieved by searching only one of two systems during a paging process for intersystem roaming terminals. This approach is not suitable for systems in which different networks have overlapping logical areas.

### GENERAL

The present invention provides a method and system for paging a mobile device in the intersection of areas of two or more different networks in which the mobile device is likely located. In some embodiments, the areas are logical areas of each network in which the mobile device most recently reported its location. Advantageously, only paging locations which overlap at least two of the different logical areas in which the mobile device is likely located are used to page the mobile device. In some embodiments, the intersection area is used to provide paging access to a first network on which a mobile device is currently not active, by forwarding the most recently known logical area identifier of the mobile device to a second network, and requesting that the second network page the mobile device with the first network page embedded therein, or to page the mobile device relaying a request for the mobile device to listen for a page on the first network.

According to a first broad aspect, the invention provides for a method of paging a mobile device in a mobile communications system comprising at least two networks, the method comprising: transmitting a first page on a first network to an intersection area of the first network with a second network, the intersection area being defined by first location information pertaining to a location of the mobile device in the first network and second location information pertaining to a location of the mobile device in the second network.

According to a second broad aspect the invention provides for a mobile communications system for paging a mobile device, the mobile communications system comprising: at least two networks; a service controller for sending a page over a first network of the system; and an internetwork overlap determiner exchanger for: a) receiving from a second network of the system second location information pertaining to a location of the mobile device in the second network; and b) processing the second location information with first location information pertaining to a location of the mobile device in the first network to generate intersection information; wherein the service controller is adapted to send the page to paging locations as a function of the intersection information.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

Preferred embodiments of the invention will now be described with reference to the accompanying diagrams, in which:
FIG. 1A and 1B are diagrams of logical groupings of cells into areas according to two different networks indicating the respective logical areas in which an example mobile device is located;
FIG. 2 is a diagram depicting the subset of cells making up the intersection of logical areas of Figure 1 in which the mobile device is located, according to one embodiment of the invention;
FIG. 3 is a flow diagram depicting steps performed in paging a mobile device according to an embodiment of the invention;
FIG. 4 is a flow diagram depicting steps performed in paging a mobile device according to a further embodiment of the invention;
FIG. 5 is a block diagram depicting elements of a system adapted to perform paging of a mobile device according to another embodiment of the invention; and
FIG. 6 is a flow diagram depicting steps performed in internetwork paging of a mobile device according to a further embodiment of the invention;
FIG. 7 is a flow diagram depicting steps performed in internetwork paging of a mobile device according to another embodiment of the invention.

### DETAILED DESCRIPTION OF PREFERRED EMBODIMENTS

Due to the differences between the nature and manner of provision of services in a multiple network communication system, it is often the case that the logical areas of one network are not made of the same group of cells which make up any particular logical area of a different network. For example, in the iDEN™ system, two of the different services provided to a mobile device, dispatch services and interconnect GSM-like services, occur through the same EBTS's and hence using the same cells in the wireless system. In the iDEN™ system, for the dispatch services the cells are grouped into logical areas known as dispatch location areas (DLAs), and for telephone services the cells are grouped into logical areas known as location areas (LAs).

Although the respective logical areas in which the mobile device is located for each network are tracked by the network and the mobile device, the interrelationship between the cells making up the logical areas of different networks previously has not been used to further isolate the location of the mobile device. Previously, cells situated inside the logical area of one network but lying outside the differently shaped logical area of another network were nonetheless paged. According to embodiments of the present invention, paging is directed to cells of the intersection between the logical areas, which is more efficient than previous methods and systems since each logical area (which the mobile device most recently reported being located in) defines in addition to an area in which the mobile device is likely located (inside the logical area) an area in which the mobile device is less likely located (outside the logical area). Previous systems simply do not identify or use the intersection of the respective logical areas, namely those cells which belong to both logical areas in which the mobile device is most likely located.

In known systems, if paging is performed for either service (in either network), all of the cells of the respective logical area in which the mobile device is likely located are paged. Embodiments of the present invention take advantage of the efficiency gained by paging a number of cells (which make up the intersection of logical areas) which is less than the number of cells of either logical area since the cells of the intersection are only a subset of either logical group of cells.

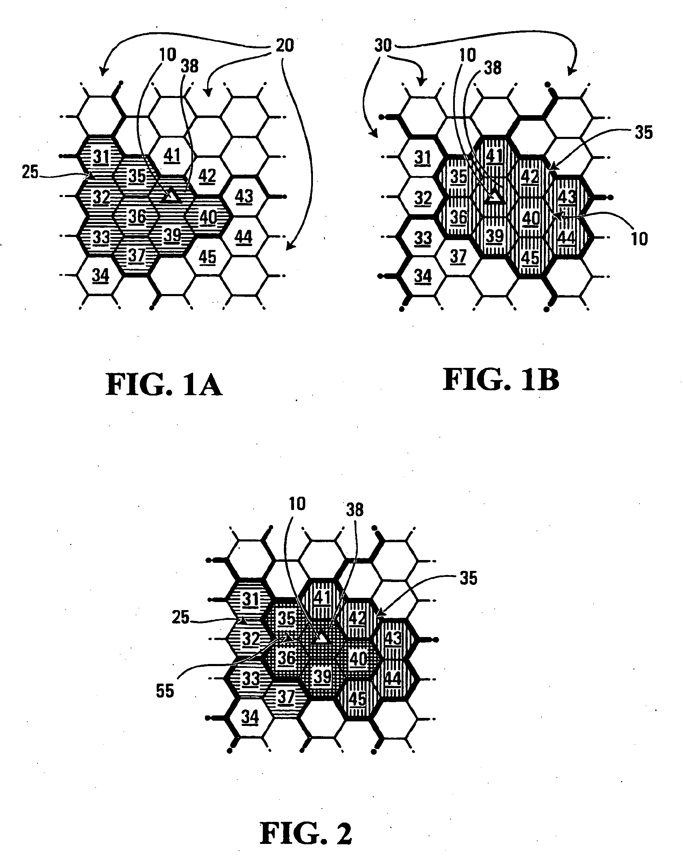

Referring to FIG. 1A and 1B, two networks of a wireless communication system and the respective cells comprising logical areas will now be described. It should be noted that although the embodiments discussed hereinbelow are implemented in networks sharing transceiver stations, as described further below, other embodiments can be implemented without sharing transceiver stations.

Figure 1A depicts a grouping of cells of a first network by network logical areas 20, the first network providing a first service within the system. Paging locations in the system in Figure 1A are cells, and these also represent the smallest paging areas of the system meaning that a cell is the smallest area that can be paged. In another embodiment, the smallest paging location that can be paged may be made of multiple smaller paging areas that are always paged as a group. The logical grouping by logical areas 20 is indicated by emphasized borders. A mobile device 10 is shown located within one of the logical areas 20 of the first network, specifically, in logical area 25, indicated by the shaded area. The particular logical area of the first network in which the mobile device is located is tracked by the first network. In some embodiments the mobile device 10 also tracks the particular logical area of the first network in which the mobile device is located. In some embodiments, due to the dynamic nature of the system and the mobility of the mobile device, the logical area is the logical area in which the mobile device was most recently known to be located in. Logical area 25 of the first network contains cells 31, 32, 33, 35, 36, 37, 38, 39, and 40. Figure 1A could for example represent in the iDEN™ system, location areas 20 for the GSM-like telephone services of an interconnect network. The specific location area 25 in which the mobile device 10 was most recently known to be located is tracked with a location area identifier (LAI) which is updated whenever the mobile device travels from one location area 20 into another.

Figure 1B depicts a grouping of cells of a second network by logical areas 30, the second network providing a second service within the system. The cells depicted in Figure 1B are the same as those in Figure 1A, however the logical grouping of logical areas 30 indicated by emphasized borders, is according to the second network. The mobile device 10 is located within one of the logical areas 30 of the second network, specifically in logical area 35, indicated by shading. As with the first network, the particular logical area in which the mobile device is located (or most recently known to be located), is tracked by the second network. In some embodiments the mobile device 10 also tracks the particular logical area of the second network in which the mobile device is located. Logical area 35 of the second network contains cells 35, 36, 38, 39, 40, 41, 42, 43, 44, and 45. Figure 1B could for example represent in the iDEN™ system, dispatch location areas 30 for the push-to-talk™ services of a dispatch network. The specific dispatch location area (DLA) 35 in which the mobile device 10 has been recently located is tracked with a dispatch area identifier (DAI) which is updated whenever the mobile device travels from one dispatch location area 30 into another.

It should be understood that the specific cell and logical area arrangements that are shown in Figures 1A and 1B, are only illustrative of a possible arrangement of cells and logical areas and should not be taken as limiting the embodiments described which may be implemented in any of a number of different cell and logical area arrangements in accordance with the invention.

Referring now to Figure 2, the subset of cells making up the intersection of logical areas of Figures 1A and 1B in which the mobile device is being tracked, according to one embodiment of the invention will be described. In Figure 2, the logical areas of both the first network and the second network are shown. The logical area 25 of the first network and the logical area 35 of the second network in which the mobile device 10 is located are shaded. The intersection area 55 which consists of a subset of cells which belong to both logical areas 25 and 35 of the first and second networks respectively, is indicated with double shading. This intersection area contains cells 35, 36, 38, 39, and 40.

In a typical scheme for paging the mobile device 10 through the first network, all of the cells of the logical area 25 of the first network would be used to page the mobile device 10 until it is found. In a typical scheme for paging the mobile device 10 through the second network, all of the cells of the logical area 35 of the second network would be used to page the mobile device 10 until it is found. Advantageously, according to the embodiment of the invention depicted in Figure 2, if the mobile device 10 is paged through the first network, only the cells belonging to the intersection of the logical areas (of the first and second network) in which the mobile device 10 was last known to be located, are used to page the mobile device 10.

In some embodiments, the mobile device may be paged through either the first network or the second network. In both cases, only the cells belonging to the intersection of the logical areas (of the first and second networks) in which the mobile device was last known to be located are used to page the mobile device.

It should be noted that although both the first and second networks of the embodiment illustrated in Figs. 1A, 1B, and 2 share the same cells (and hence the same EBTSs), the invention contemplates network overlap in the general sense of two or more networks which may or may not share resources or cell boundaries. In a case where the networks do not share resources or cell boundaries, information regarding which cells of one network geographically overlap which cells of the other network may be predetermined and available to each network, or may otherwise be calculated. Each cell of the logical area of one network in which the mobile device 10 was most recently reported being located which overlaps a cell of a logical area of a second network in which the mobile device 10 was most recently reported being located forms part of the intersection area.

In some embodiments with different networks, instead of a strict geographical area overlap, a larger extended overlap may be utilized. Since various factors may effect how and from where certain pages to a particular location must be performed, in a system involving EBTSs of different networks at different geographical locations, a geographical overlap may not provide enough certainty or efficiency. The extended overlap of some embodiments include both the geographical overlap as described above and an extension region. The extension region in a straightforward embodiment comprises all neighbor cells of the cells of the intersection area which are not cells of the intersection area. This may be extended to neighbor cells of the neighbor cells and so on. As a result, in the straightforward embodiment, the extension region forms a region around the periphery of the intersection area.

The extension region can help to ensure, by virtue of the extended region of paging, that the mobile is paged.

Individual networks of a multiple network system which are particularly suited for incorporation of the system and method according to the invention have separate paging systems and different logical area mappings, in which the different individual networks are adapted to communicate with each other.

Although the logical areas of each network have been described as being either the logical area in which the mobile device is located or the logical area in which the mobile device was last known to be located, a logical area may be defined by other criteria which imply a likely location of the mobile device when the page is delivered. Generally, the logical area of one network may be defined as the area which would be subject to a page over that first network if there were no other networks. In these embodiments, the intersection of logical areas is the area in which both networks would page the mobile device.

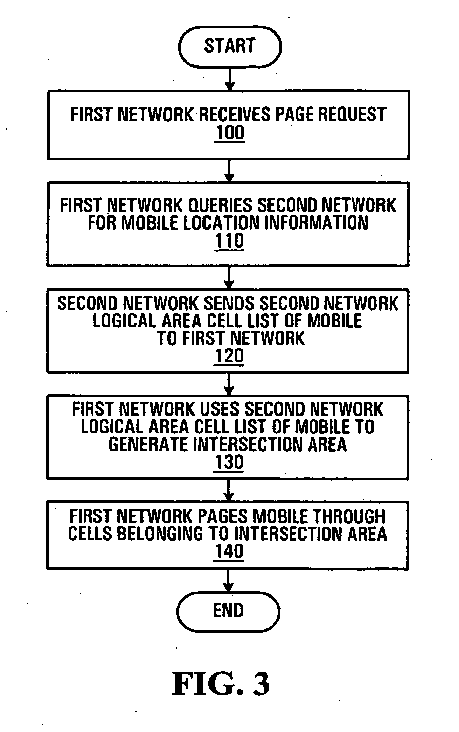

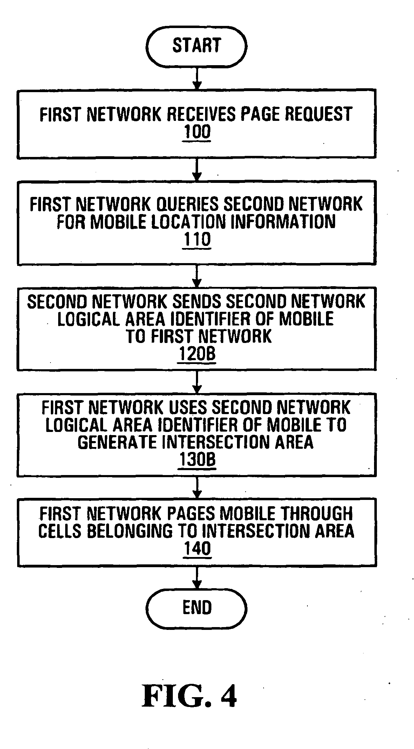

Although there are in general many different ways to implement paging only of the cells of the logical area of one network in which the mobile device is likely located which intersect with cells of a logical area of another network in which the mobile device is likely located, Figures 3 and 4 depict preferred embodiments for carrying out the paging.

Referring to Figure 3, the steps performed in paging a mobile device according to another embodiment of the invention are discussed. In this embodiment, paging is performed on a network-by-network basis depending upon the service over which a mobile device is paged. In this embodiment, a first network receives a page request at step 100. Before paging the mobile device, the first network queries the second network for mobile device location information at step 110. According to the embodiment depicted in Figure 3, the mobile device location information the second network sends to the first network includes the logical area cell list which is a listing of the cells of the logical area of the second network in which the mobile device was most recently located at step 120. The first network has the first network logical area identifier for the first network logical area in which the mobile device was last known to be located, and has access to a listing of the cells of each logical area of the first network. By identifying those cells which are present in both logical areas in which the mobile device was last known to be located (of the first and second network respectively) using the listing of cells for each logical area, an intersection area of cells is generated at step 130. This calculation of the intersection of cells is well suited to the iDEN™ system, since the same cells are used in each network. In the last step 140 only the cells of the intersection area are used to page the mobile device.

Referring to Figure 4, the steps performed in paging a mobile device according to a further embodiment of the invention are discussed. In this embodiment, each of the steps indicated in Figure 3 are performed except for steps 120 and 130. According to the embodiment depicted in Figure 4, the second network sends to the first network a logical area identifier corresponding to the logical area of the second network in which the mobile device was most recently located at step 120B. The first network has the logical area identifier for the logical area of the first network in which the mobile device was last known to be located and has access to a listing of the cells of each logical area of the first network and cells of each logical area of the second network. By identifying those cells which are present in both logical areas, using the listing of cells for each network logical area of the first network, and the listing of cells for the second network of the logical area of the second network in which the mobile device was last known to be located, an intersection area of cells is generated at step 130B. As with Figure 3, in the last step 140 only the cells of the intersection area are used to page the mobile device.

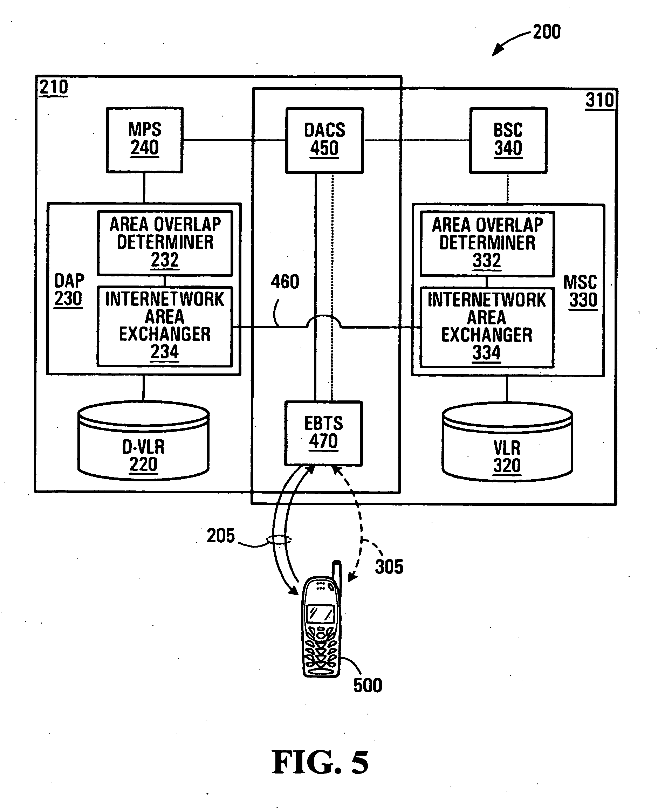

Referring now to Figure 5, a further embodiment of the invention will now be discussed. Figure 5 depicts elements of a system (generally indicated by 200) adapted to perform paging of a mobile device, namely, the elements of an iDEN™ system adapted to perform paging of a mobile device using elements from both the dispatch network and the interconnect network.

The system shown includes a dispatch network 210 and an interconnect network 310.

The dispatch network 210 performs dispatch call processing and includes a modified dispatch application processor (DAP) 230 according to the embodiment of Figure 5. The DAP includes an internetwork area exchanger (IAE) 234 coupled to an area overlap determiner (AOD) 232. The DAP is coupled to a dispatch visited location register (D-VLR) 220 which stores data related to the tracking of the mobile device, and in this embodiment includes the dispatch area identifiers (DAIs) of the last dispatch location area in which the mobile device was known to be located. The DAP 230 is coupled to a Metro Packet Switch (MPS) 240 which in turn is coupled to a digital access cross-connect switch (DACS) 450. Th DACS is coupled to an enhanced base transceiver station (EBTS) 470. The EBTS 470 is shown as being capable of being coupled over either transmit or receive half-duplex dispatch channels 205 with a mobile device 500. It should be understood that EBTS 470 is only one EBTS 470 of a plurality of EBTSs implemented in the system, normally one for each cell. For simplicity only one EBTS is shown, corresponding to the EBTS 470 of the cell in which the mobile device 500 is presently, and last known to be, located.

The interconnect network 310 performs interconnect call processing and includes a modified mobile switching center (MSC) 330 according to the embodiment of Figure 5. The MSC 330 includes an internetwork area exchanger (IAE) 334 coupled to an area overlap determiner (AOD) 332. The internetwork area exchanger 334 of the interconnect network 310 is coupled to the internetwork area exchanger 234 of the dispatch network 210 by an internetwork area exchange channel 460. The internetwork area exchange channel 460 may be implemented using any of a number of connections and protocols to exchange information, including but not limited to wireless, optical, or electrical line connections, exchanging information over data, control, or message channels sent through the system, through a combination of the networks (210, 310) or directly between the IAE 234 of the dispatch network 210 and the IAE 334 of the interconnect network 310. The MSC 330 is coupled to a visited location register (VLR) 320 which stores data related to the tracking of the mobile device 500, and in this embodiment includes the location area identifiers (LAIs) of the last location area in which the mobile device 500 was known to be located. The MSC 330 is coupled to a base site controller (BSC) 340 which in turn is coupled to the digital access cross-connect switch (DACS) 450. The DACS 450 and the EBTS 470 is shared by both the dispatch network 210 and the interconnect network 310. The EBTS 470 is shown as being capable of being coupled over full-duplex interconnect channel 305 with the mobile device 500.

The functionality of the system 200 adapted to perform paging of a mobile device according to the embodiment of Figure 5 will now be discussed.

In the dispatch network 210, the DAP 230 upon receiving a request to page the mobile device 500, uses IAE 234 to request, over the internetwork area exchange channel 460, location information from the IAE 334 of the MSC 330 of the interconnect network 310. The MSC 330 accesses the VLR 320 to obtain the location area identifier (LAI) of the location area in which the mobile device 500 was last located, as the MSC 330 would normally do prior to paging the mobile device 500. The IAE 334 of the MSC 330 transmits location information to the IAE 234 of the DAP 230 over the internetwork area exchange channel 460. The location information may include the LAI itself or a list of cells of the location area identified in by the LAI. The IAE 234 of the DAP 230 receives either the LAI or the list of cells and forwards this to the AOD 232 of the DAP 230. The DAP 230 accesses the D-VLR 220 to obtain the dispatch area identifier (DAI) of the dispatch location area (DLA) in which the mobile device 500 was last located, as it would normally do prior to paging a mobile device 500. The AOD 232 processes the information retrieved by the IAE 234 from the interconnect network 310, with the information available to the DAP 230 including the DAI and a list of cells of the dispatch location area identified by the DAI to generate an intersection area. The intersection area is made up of the cells which are present both in the DLA identified by the DAI and the LA identified by the LAI. The identification of these cells is available to the DAP 230 for paging purposes. Instead of using a list of all of the cells corresponding to the DLA identified by the DAI from the D-VLR 220, only the intersection area cells are used. Paging is carried out through MPS 240 and DACS 450 over various EBTSs of the cells of the intersection, one of which contains EBTS 470 in the cell in which the mobile device 500 is located.

In the interconnect network 310, the MSC 330 upon receiving a request to page the mobile device 500, uses IAE 334 to request, over the internetwork area exchange channel 460, location information from the IAE 234 of the DAP 230 of the dispatch network 210. The DAP 230 accesses the D-VLR 220 to obtain the dispatch area identifier (DAI) of the dispatch location area in which the mobile device 500 was last located, as the DAP 230 would normally do prior to paging the mobile device 500. The IAE 234 of the DAP 230 transmits location information to the IAE 334 of the MSC 330 over the internetwork area exchange channel 460. The location information may include the DAI itself or a list of cells of the dispatch location area identified in the DAI. The IAE 334 of the MSC 330 receives either the DAI or the list of cells and forwards this to the AOD 332 of the MSC 330. The MSC 330 accesses the VLR 320 to obtain the location area identifier (LAI) of the location area (LA) in which the mobile device 500 was last located, as the MSC 330 would normally do prior to paging the mobile device 500. The AOD 332 processes the information retrieved by the IAE 334 from the dispatch network 210, with the information available to the MSC 330 including the LAI and a list of cells of the location area identified by the LAI to generate an intersection area. The intersection area is made up of the cells which are present both in the LA identified by the LAI and the DLA identified by the DAI. The identification of these cells is available to the MSC 330 for paging purposes. Instead of using a list of all of the cells corresponding to the LA identified by the LAI from the VLR 320, only the intersection area cells are used. Paging is carried out through BSC 340 and DACS 450 over various EBTSs of the cells of the intersection, one of which contains EBTS 470 in the cell in which the mobile device 500 is located.

It should be understood that Figure 5 depicts only a specific example embodiment implementing an adapted system according to the invention. Numerous alternative embodiments in accordance with the invention may be arranged in many different ways, including the utilization of different elements or combinations of elements, and the implementation of different media or equipment which function in accordance with the teachings of the present invention. In some embodiments for example, one or both of the AOD 232 and IAE 234 may be located separate from the DAP 230 or even exterior to the dispatch network 230. Similarly one or both of the AOD 332 and IAE 334 may be located separate from the MSC 330 or even exterior to the interconnect network 330. In other embodiments one or both of the D-VLR 220 and the VLR 320 may be located external to their respective networks 210 and 310 or may reside in a larger single multiple network database. In some embodiments, the AOD and IAE are part of a single internetwork overlap determiner exchanger (IODE) which performs the functionality of both the AOD and the IAE. It should be understood that the AODs (232, 332), IAEs (234, 334) and other elements depicted in Figure 5, may be implemented in hardware, software, firmware, or any combination thereof.

It should be understood that although a specific example implementation has been described with respect to Fig. 5 having a specific combination of elements coupled in a certain way, other elements may be utilized without departing from the nature of the invention. For example, although not shown in Figure 5, some embodiments utilize a BTS and/or a call processing server.

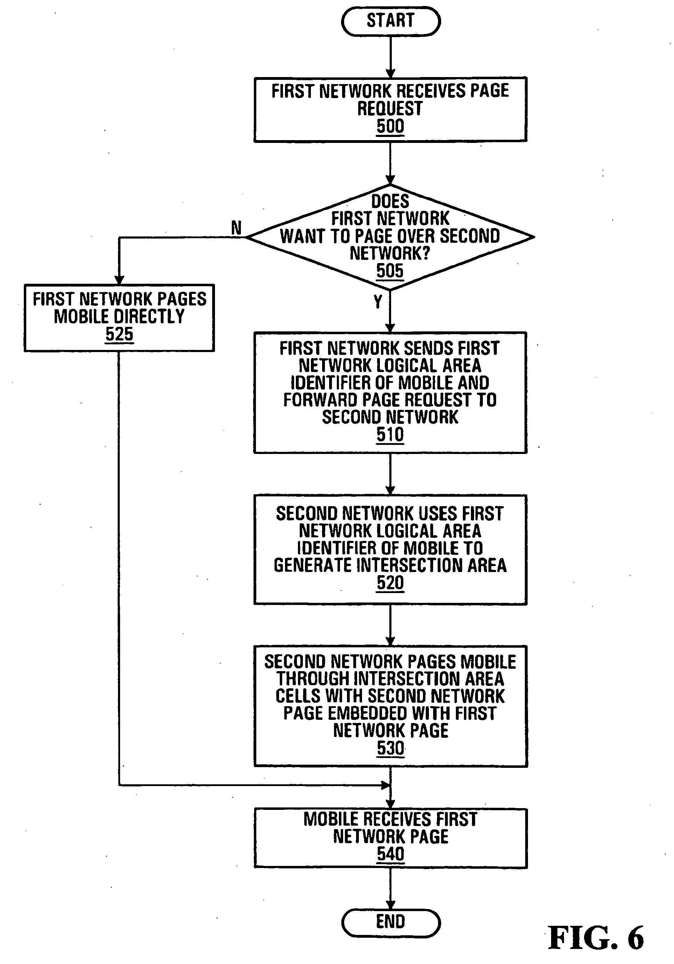

Referring to FIG. 6, the steps performed in internetwork paging of a mobile device in first and second networks capable of communicating with each other according to a further embodiment of the invention will now be described.

When a mobile device is not active in a first network, but is active, and perhaps in idle mode in a second network, a mobile device is normally completely inaccessible to the first network, to which it appears for all intents and purposes as if the mobile device is powered down. An embodiment of the invention uses the second network to alert the mobile device that there is a page for the mobile device on the first network.

At step 500, the first network receives a request to page the mobile device over the first network. At step 505 the network determines if it wants to page the mobile device over the second network. If the mobile device is active on the first network, the first network pages the mobile device directly at step 525. This may be performed in accordance with standard paging techniques or in combination with requested location information from the second network in a similar manner to that described in association with other embodiments described herein. At step 540, if paged directly by the first network, the mobile device receives the first network page.

At step 505, if the first network decides that the mobile device should be paged over the second network, for example if the mobile device is inaccessible to the first network because it is inactive on the first network, at step 510, the first network sends the first network logical area identifier of the mobile device to the second network. The first network also sends a request to the second network to forward a page of the first network. Although the mobile device is inactive on the first network, the logical area identifier is the best and most recent information regarding the location of the mobile device possessed by the first network, which may be of assistance to the paging of the mobile device by the second network as discussed below. The request sent by the first network to the second network indicates to the second network that first network requests that a first network page (embedded in the request) be forwarded to the mobile device.

At step 520, the second network uses the first network logical area identifier to generate an intersection area. At step 530 the second network pages the mobile through the cells of the intersection area with a second network page. The mobile receives the second network page. In this embodiment the page from the first network is itself embedded in the page of the second network.

In some embodiments the second network page contains some metadata indicating the identity of the first network and the fact that it has sent a page to the mobile device. In other embodiments the mobile device is capable of recognizing the page of the first network without any metadata, and hence in those embodiments it is not included in the second page. At step 540 the mobile device receives the page, either directly from the first network (described above) or by recognition and/or extraction of the embedded first network page from the second network page.

After this step, paging is complete, and the mobile device may or may not decide to become active on the first network to answer the page.

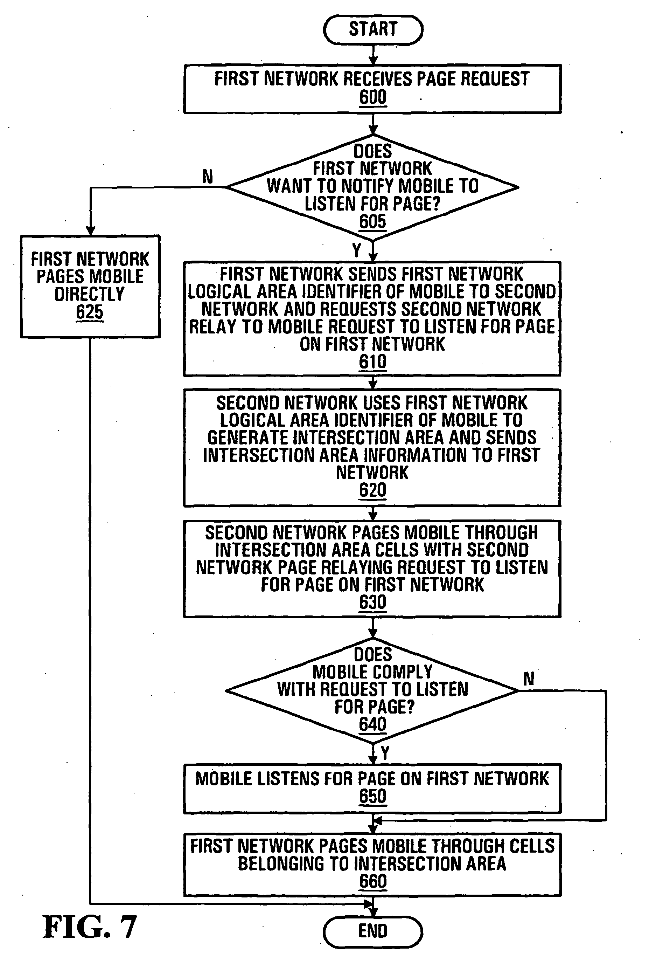

Referring to FIG. 7, the steps performed in internetwork paging of a mobile device according to another further embodiment of the invention, will now be described. This embodiment is similar to the embodiment described in Figure 6, however, the first network does not request forwarding of a first network page, but instead reserves the paging function for itself, and asks the second network to relay a request for the mobile to listen for a page on the first network. This may reduce the traffic over the second network if the first page contains a relatively large amount of information.

At step 600, the first network receives a request to page the mobile device over the first network. At step 605 the network determines if it wants to page the mobile device over the second network. If the mobile device is active on the first network, the first network pages the mobile device directly at step 625 in an appropriate manner.

If at step 605 the network determines it wants to notify the mobile device to listen for a page over the first network, at step 610, the first network sends the first network logical area identifier of the mobile device to the second network, and requests that the second network relay to the mobile device a request to listen for a page on the first network. The second network uses the first network logical area identifier of the mobile device to generate an intersection area, and sends intersection area information to the first network at step 620. At step 630 the second network pages the mobile device through the cells of the intersection area with a second network page. This page serves to relay to the mobile device that the first network has requested the mobile device to listen for a page on the first network.

At step 640, the mobile device decides whether or not it will comply with the request to listen for the page, if it does not the mobile device does not listen for the page, if it does, it listens for the page at step 650. At step 660 the first network pages the mobile device through cells belonging to the intersection area.

Whether or not the mobile is listening, it is either paged in step 660 through the intersection area or paged directly at step 625, before the end of the process.

A mobile device, which heretofore had been unavailable to be paged over a first network because it was not active on the first network, can now be paged through a second network, and paged in a more efficient manner by use of an intersection area. In another embodiment, the wireless communication system includes more than two networks. In such a system the structure of the logical areas of any two or more of the networks are used to reduce the number of cells used to page the mobile device, by only using cells from the intersection of the two or more logical areas of respective networks to page the mobile device.

According to some embodiments, any location information pertaining to the location of the mobile device within a network which may be used to eliminate paging locations or cells from the total area of the network to be paged, may be forwarded to another network in answer to a request for location information. Such information may include but is not limited to a specific set of coordinates locating the mobile device at a location at a specific time, an area defining probabilities of finding the mobile device at various locations at specific times, a series of past or projected locations for a mobile device, or otherwise any other information from one network which could be used to facilitate more efficient paging in another network by virtue of the information helping to define an area in which the mobile device is more likely to be found.

Although the particular embodiments discussed hereinbefore have a network which queries another network for location information prior to paging a mobile device, in general, the network could be provided the necessary location information on an ongoing basis, by for example, the first network periodically requesting the location information from the other network, or by the other network automatically and periodically transmitting the location information to the network. In some embodiments, the other network automatically and periodically transmits the location to the network, whenever the mobile device crosses a logical area boundary of the other network. In embodiments where the other network is such that it does not change often in structure (cells and groupings of cells into logical areas) it is more efficient to transmit only the logical area identifiers, each network possessing enough geographical information of the other respective network to calculate the overlap. In other embodiments the cell list is automatically transmitted.

It should be understood that although the dispatch network and interconnect network of the IDEN™ system have been used as an example implementation to illustrate various embodiments of the invention, it should be understood that other embodiments involve different pairs of networks in different systems, for example but not limited to: a dispatch network and a CDMA network, and a packet data network and a voice call network.

## Claims

1. A method of paging a mobile device (10, 500) in a mobile communications system (200) comprising at least two networks (210, 310), the method comprising
transmitting (140) a first page on a first network (310) to an intersection area (55) of the first network with a second network (210), the intersection area (55) being defined by first location information pertaining to a location of the mobile device (10, 500) in the first network (310) and second location information pertaining to a location of the mobile device (10, 500) in the second network (210).

2. A method according to claim 1 further comprising:
transmitting a second page on the second network (210) to the intersection area (55).

3. A method according to claim 1 or claim 2, wherein said intersection area (55) comprises each possible paging location consistent with both the first location information and the second location information.

4. A method according to any of claims 1 to 3, wherein the first location information identifies at least one location in the first network (310) and the second location information identifies at least one location in the second network (210), wherein said intersection area (55) comprises an intersection between the at least one location of the first network and the at least one location of the second network.

5. A method according to any of claims 1 to 4, wherein the first location information identifies a logical area (25) of the first network (310) and the second location information identifies a logical area (35) of the second network (210), wherein said intersection area (55) comprises an intersection between the logical area (25) of the first network and the logical area (35) of the second network.

6. A method according to claim 5, wherein each paging location within the first network (310) comprises a cell (31-35, 35-40), and wherein the intersection area (55) comprises only cells (35, 36, 38, 39, 40) of the first network which intersect with the logical area (35) of the second network.

7. A method according to claim 5 or claim 6, wherein the logical area (35) of the second network (210) comprises at least one cell (35, 36, 38 - 45) of the second network, and wherein the intersection area (55) comprises only cells (35, 36, 38, 39, 40) of the first network (310) which intersect any cell of the logical area (35) of the second network.

8. A method according to claim 6 or claim 7, wherein each transmitter for a cell of the first network (310) is co-located with a transmitter for a corresponding co-extensive cell of the second network (210), and wherein each transmitter for the corresponding co-extensive cell of the second network share an antenna.

9. A method according to any of claims 1 to 8, wherein the first location information identifies at least one of:
a first set of cells (31-33, 35-40) within the first network (310) within which a mobile device (10, 500) is expected to be located;
a first logical area (25) within the first network (310) having a first associated set of cells (31-33, 35-40) within which a mobile device (10, 500) is expected to be located; and
an identifier of a first geographical area within the first network (310) within which a mobile device (10, 500) is expected to be located;
and wherein the second location information identifies at least one of:
a second set of cells (35, 36, 38-45) within the second network (210) within which a mobile device (10, 500) is expected to be located;
a second logical area within the second network (210) having a second associated set of cells within which a mobile device (10, 500) is expected to be located; and
an identifier of a second geographical area within the second network within which a mobile device (10, 500) is expected to be located.

10. A method according to any of claims 1 to 9, wherein the first network (310) is an interconnect network, the second network (210) is a dispatch network, and wherein the first location information comprises a location area identifier identifying a location area having a first associated set of cells (31-33, 35-40) within the first network within which a mobile device (10, 500) is expected to be located, and the second location information comprises a dispatch area identifier identifying a dispatch location area having a second associated set of cells (35, 36, 38 - 45) within which a mobile device (10) is expected to be located.

11. A method according to any of claims 1 to 10 further comprising at least one of:
the first network (310) periodically querying the second network (210) for the second location information;
the second network (210) periodically providing the first network (310) with the second location information;
the second network providing the first network with the second location information each time a mobile device (10, 500) to be paged crosses a boundary of a logical area (35) of the second network; and
the first network prior to transmitting the first page querying the second network for the second location information.

12. A method according to any of claims 1 to 11 further comprising:
comparing the first location information with the second location information;
generating intersection location information comprising intersection locations defined by the first location information which are also locations defined by the second location information; and
defining the intersection area (55) in which to transmit the first page to comprise paging locations which are defined by the intersection locations.

13. A method according to any of claims 1 to 12, wherein said intersection area (55) comprises a geographical area defined by an intersection of the respective known geographical areas of the two networks (210, 310).

14. A method according to any of claims 1 to 12, wherein the first network (310) and the second network (210) comprise a pair of networks, the pair selected from a group of pairs consisting of:
a) an interconnect network (310) and a dispatch network (210);
b) a dispatch network (210) and a CDMA network; and
c) a packet data network and a voice call network.

15. A method according to any of claims 1 to 14, wherein the step of transmitting the first page comprises:
transmitting the first page to the second network (210);
embedding the first page in a second page of the second network; and
transmitting said second page on the second network to said intersection area (55).

16. A method according to any of claims 1 to 15 further comprising before the step of transmitting the first page:
transmitting a request to listen for the first page to said second network (210); and
relaying on the second network the request to listen for the first page to said intersection area (55).

17. A mobile communications system (200) for paging a mobile device (10, 500), the mobile communications system comprising
at least two networks (210, 310);
a service controller for sending a page over a first network (310) of the system; and
an internetwork overlap determiner exchanger (232, 234, 332, 334) for:
a) receiving from a second network (210) of the system second location information pertaining to a location of the mobile device (10, 500) in the second network (210); and
b) processing the second location information with first location information pertaining to a location of the mobile device (10, 500) in the first network (310) to generate intersection information;
wherein the service controller is adapted to send the page to paging locations as a function of the intersection information.

18. A mobile communications system (200) according to claim 17 further comprising:
a visited location register (220, 320) for storing the first location information;
wherein the service controller is adapted to retrieve the first location information, and wherein the internetwork overlap determiner exchanger comprises:
an internetwork area exchanger (234, 334) for receiving the second location information; and
an area overlap determiner (232, 332) for processing the second location information with the first location information to generate the intersection information, wherein the intersection information comprises locations defined by the first location information which are locations also defined by the second location information;
wherein the paging locations are defined by the intersection information.

19. A mobile communications system according to claim 18, wherein the first location information comprises information pertaining to a first logical area (25) of the first network, and the second location information comprises information pertaining to a second logical area (35) of the second network, and wherein the area overlap determiner is adapted to generate the intersection information by determining cells (35, 36, 38-40) of an intersection area (55) which are located within both the first logical area (25) and the second logical area (35), and wherein the intersection information defines the cells (35, 36, 38-40) of the intersection area (55), and wherein the paging locations are co-extensive with the cells (35, 36, 38-40) of the intersection area (55).

20. A mobile communications system according to any of claims 17 to 19 wherein the second network of the system comprises:
an internetwork area exchanger (234, 334) for transmitting the second location information from the second network to the internetwork overlap determiner exchanger.

## Patentansprüche

1. Verfahren zum Ausrufen einer Mobilvorrichtung (10, 500) in einem Mobilkommunikationssystem (200), das mindestens zwei Netze (210, 310) umfasst, wobei das Verfahren Folgendes umfasst:
Senden (140) eines ersten Ausrufs in einem ersten Netz (310) zu einem Knotenbereich (55) des ersten Netzes mit einem zweiten Netz (210), wobei der Knotenbereich (55) durch erste Positionsinformationen, die zu einer Position der Mobilvorrichtung (10, 500) in dem ersten Netz (310) gehören, und zweite Positionsinformationen, die zu einer Position der Mobilvorrichtung (10, 500) in dem zweiten Netz (210) gehören, definiert wird.

2. Verfahren nach Anspruch 1, das des Weiteren Folgendes umfasst:
Senden eines zweiten Ausrufs in dem zweiten Netz (210) zu dem Knotenbereich (55).

3. Verfahren nach Anspruch 1 oder Anspruch 2, wobei der Knotenbereich (55) jede mögliche Ausrufposition umfasst, die sowohl mit den ersten Positionsinformationen als auch mit den zweiten Positionsinformationen übereinstimmt.

4. Verfahren nach einem der Ansprüche 1 bis 3, wobei die ersten Positionsinformationen mindestens eine Position in dem ersten Netz (310) identifizieren und die zweiten Positionsinformationen mindestens eine Position in dem zweiten Netz (210) identifizieren, wobei der Knotenbereich (55) einen Knotenpunkt zwischen der mindestens einen Position des ersten Netzes und der mindestens einen Position des zweiten Netzes umfasst.

5. Verfahren nach einem der Ansprüche 1 bis 4, wobei die ersten Positionsinformationen einen logischen Bereich (25) des ersten Netzes (310) identifizieren und die zweiten Positionsinformationen einen logischen Bereich (35) des zweiten Netzes (210) identifizieren, wobei der Knotenbereich (55) einen Knotenpunkt zwischen dem logischen Bereich (25) des ersten Netzes und dem logischen Bereich (35) des zweiten Netzes umfasst.

6. Verfahren nach Anspruch 5, wobei jede Ausrufposition innerhalb des ersten Netzes (310) eine Zelle (31-35, 35-40) umfasst und der Knotenbereich (55) nur Zellen (35, 36, 38, 39, 40) des ersten Netzes umfasst, die den logischen Bereich (35) des zweiten Netzes schneiden.

7. Verfahren nach Anspruch 5 oder Anspruch 6, wobei der logische Bereich (35) des zweiten Netzes (210) mindestens eine Zelle (35, 36, 38-45) des zweiten Netzes umfasst und der Knotenbereich (55) nur Zellen (35, 36, 38, 39, 40) des ersten Netzes (310) umfasst, die jede Zelle des logischen Bereichs (35) des zweiten Netzes schneiden.

8. Verfahren nach Anspruch 6 oder Anspruch 7, wobei jeder Sender für eine Zelle des ersten Netzes (310) zusammen mit einem Sender für eine entsprechende koextensive Zelle des zweiten Netzes (210) angeordnet ist und alle Sender für die entsprechende koextensive Zelle des zweiten Netzes dieselbe Antenne nutzen.

9. Verfahren nach einem der Ansprüche 1 bis 8, wobei die ersten Positionsinformationen mindestens eins der Folgenden identifizieren:
einen ersten Satz von Zellen (31-33, 35-40) innerhalb des ersten Netzes (310), von dem erwartet wird, dass sich eine Mobilvorrichtung (10, 500) darin befindet;
einen ersten logischen Bereich (25) innerhalb des ersten Netzes (310) mit einem ersten zugehörigen Satz von Zellen (31-33, 35-40), von dem erwartet wird, dass sich eine Mobilvorrichtung (10, 500) darin befindet; und
einen Identifizierer eines ersten geografischen Bereichs in dem ersten Netz (310), von dem erwartet wird, dass sich eine Mobilvorrichtung (10, 500) darin befindet;
und wobei die zweiten Positionsinformationen mindestens eins der Folgenden identifizieren:
einen zweiten Satz von Zellen (35, 36, 38-45) innerhalb des zweiten Netzes (210), von dem erwartet wird, dass sich eine Mobilvorrichtung (10, 500) darin befindet;
einen zweiten logischen Bereich innerhalb des zweiten Netzes (210) mit einem zweiten zugehörigen Satz von Zellen, von dem erwartet wird, dass sich eine Mobilvorrichtung (10, 500) darin befindet; und
einen Identifizierer eines zweiten geografischen Bereichs in dem zweiten Netz, von dem erwartet wird, dass sich eine Mobilvorrichtung (10, 500) darin befindet.

10. Verfahren nach einem der Ansprüche 1 bis 9, wobei das erste Netz (310) ein Verbindungsnetz ist, das zweite Netz (210) ein Sendenetz ist und die ersten Positionsinformationen einen Positionsbereichsidentifizierer umfassen, der einen Positionsbereich identifiziert, der einen ersten zugehörigen Satz von Zellen (31-33, 35-40) innerhalb des ersten Netzes aufweist, von dem erwartet wird, dass sich eine Mobilvorrichtung (10, 500) darin befindet, und die zweiten Positionsinformationen einen Sendebereichsidentifizierer umfassen, der einen Sendepositionsbereich identifiziert, der einen zweiten zugehörigen Satz von Zellen (35, 36, 38-45) aufweist, von dem erwartet wird, dass sich eine Mobilvorrichtung (10) darin befindet.

11. Verfahren nach einem der Ansprüche 1 bis 10, das des Weiteren mindestens einen der folgenden Schritte umfasst:
das zweite Netz (210) durch das erste Netz (310) periodisch auf die zweiten Positionsinformationen hin abfragen;
dem ersten Netz (310) durch das zweite Netz (210) periodisch die zweiten Positionsinformationen bereitstellen;
dem ersten Netz durch das zweite Netz die zweiten Positionsinformationen jedes Mal bereitstellen, wenn eine Mobilvorrichtung (10, 500), die ausgerufen werden soll, eine Grenze eines logischen Bereichs (35) des zweiten Netzes überschreitet; und
das zweite Netz durch das erste Netz vor dem Senden des ersten Ausrufs auf die zweiten Positionsinformationen hin abfragen.

12. Verfahren nach einem der Ansprüche 1 bis 11, das des Weiteren Folgendes umfasst:
Vergleichen der ersten Positionsinformationen mit den zweiten Positionsinformationen;
Erzeugen von Knotenpunktpositionsinformationen, die Knotenpunktpositionen umfassen, die von den ersten Positionsinformationen definiert werden und ebenfalls Positionen sind, die von den zweiten Positionsinformationen definiert werden; und
Definieren des Knotenbereichs (55), in dem der erste Ausruf gesendet werden soll, so dass er Ausrufpositionen umfasst, die von den Knotenpunktpositionen definiert werden.

13. Verfahren nach einem der Ansprüche 1 bis 12, wobei der Knotenbereich (55) einen geografischen Bereich umfasst, der von einem Knotenpunkt der entsprechenden bekannten geografischen Bereiche der beiden Netze (210, 310) definiert wird.

14. Verfahren nach einem der Ansprüche 1 bis 12, wobei das erste Netz (310) und das zweite Netz (210) ein Paar Netze umfassen und das Paar aus einer Gruppe von Paaren ausgewählt wird, die aus Folgendem besteht:
a) ein Verbindungsnetz (310) und ein Sendenetz (210);
b) ein Sendenetz (210) und ein CDMA-Netz; und
c) ein Paketdatennetz und ein Sprachrufnetz.

15. Verfahren nach einem der Ansprüche 1 bis 14, wobei der Schritt des Sendens des ersten Ausrufs Folgendes umfasst:
Senden des ersten Ausrufs zu dem zweiten Netz (210);
Einbetten des ersten Ausrufs in einen zweiten Ausruf des zweiten Netzes; und
Senden des zweiten Ausrufs in dem zweitem Netz zu dem Knotenbereich (55).

16. Verfahren nach einem der Ansprüche 1 bis 15, das des Weiteren vor dem Schritt des Sendens des ersten Ausrufs Folgendes umfasst:
Senden einer Aufforderung an das zweite Netz (210), auf den ersten Ausruf zu achten; und
auf dem zweiten Netz Weiterleiten der Aufforderung an den Knotenbereich (55), auf den ersten Ausruf zu achten.

17. Mobiles Kommunikationssystem (200) zum Ausrufen einer Mobilvorrichtung (10, 500), wobei das mobile Kommunikationssystem Folgendes umfasst:
mindestens zwei Netze (210, 310);
einen Dienstkontroller zum Senden eines Ausrufs über ein erstes Netz (310) des Systems; und
eine Zwischennetzüberlagerungsermittlungsvermittlung (232, 234, 332, 334) zum:
a) Empfangen von zweiten Positionsinformationen von einem zweiten Netz (210) des Systems, die zu einer Position der Mobilvorrichtung (10, 500) in dem zweiten Netz (210) gehören; und
b) Verarbeiten der zweiten Positionsinformationen mit ersten Positionsinformationen, die zu einer Position der Mobilvorrichtung (10, 500) in dem ersten Netz (310) gehören, um Knotenpunktinformationen zu erzeugen;
wobei der Dienstkontroller dafür ausgelegt ist, den Ausruf als eine Funktion der Knotenpunktinformationen zu Ausrufpositionen zu senden.

18. Mobiles Kommunikationssystem (200) nach Anspruch 17, das des Weiteren Folgendes umfasst:
ein Register für besuchte Positionen (220, 320) zum Speichern der ersten Positionsinformationen;
wobei der Dienstkontroller dafür ausgelegt ist, die ersten Positionsinformationen abzufragen, und wobei die Zwischennetzüberlagerungsermittlungsvermittlung Folgendes umfasst:
eine Zwischennetzbereichsvermittlung (234, 334) zum Empfangen der zweiten Positionsinformationen; und
einen Bereichsüberlagerungsermittler (232, 332) zum Verarbeiten der zweiten Positionsinformationen mit den ersten Positionsinformationen, um die Knotenpunktinformationen zu erzeugen, wobei die Knotenpunktinformationen Positionen umfassen, die von den ersten Positionsinformationen definiert werden und Positionen sind, die ebenfalls von den zweiten Positionsinformationen definiert werden;
wobei die Ausrufpositionen von den Knotenpunktinformationen definiert werden.

19. Mobiles Kommunikationssystem nach Anspruch 18, wobei die ersten Positionsinformationen Informationen umfassen, die zu einem ersten logischen Bereich (25) des ersten Netzes gehören, und die zweiten Positionsinformationen Informationen umfassen, die zu einem zweiten logischen Bereich (35) des zweiten Netzes gehören, und wobei der Bereichsüberlagerungsermittler dafür ausgelegt ist, die Knotenpunktinformationen durch Ermitteln von Zellen (35, 36, 38-40) eines Knotenbereichs (55) zu erzeugen, die sowohl in dem ersten logischen Bereich (25) als auch in dem zweiten logischen Bereich (35) angeordnet sind, und wobei die Knotenpunktinformationen die Zellen (35, 36, 38-40) des Knotenbereichs (55) definieren und die Ausrufpositionen koextensiv mit den Zellen (35, 36, 38-40) des Knotenbereichs (55) sind.

20. Mobiles Kommunikationssystem nach einem der Ansprüche 17 bis 19, wobei das zweite Netz des Systems Folgendes umfasst:
eine Zwischennetzbereichsvermittlung (234, 334) zum Senden der zweiten Positionsinformationen von dem zweiten Netz zu der Zwischennetzüberlagerungsermittlungsvermittlung.

## Revendications

1. Un procédé de recherche d'un dispositif mobile (10, 500) dans un système de communications mobile (200) comprenant au moins deux réseaux (210, 310), le procédé comprenant :
la transmission (140) d'une première recherche sur un premier réseau (310) vers une zone d'intersection (55) du premier réseau avec un deuxième réseau (210), la zone d'intersection (55) étant définie par des premières informations d'emplacement relatives à un emplacement du dispositif mobile (10, 500) sur le premier réseau (310) et des deuxièmes informations d'emplacement relatives à un emplacement du dispositif mobile (10, 500) sur le deuxième réseau (210).

2. Un procédé selon la revendication 1 comprenant en outre :
la transmission d'une deuxième recherche sur le deuxième réseau (210) vers la zone d'intersection (55).

3. Un procédé selon la revendication 1 ou 2, où ladite zone d'intersection (55) comprend chaque emplacement de recherche possible cohérent avec à la fois les premières informations d'emplacement et les deuxièmes informations d'emplacement.

4. Un procédé selon l'une quelconque des revendications 1 à 3, où les premières informations d'emplacement identifient au moins un emplacement dans le premier réseau (310) et les deuxièmes informations d'emplacement identifient au moins un emplacement dans le deuxième réseau (210), où ladite zone d'intersection (55) comprend une intersection entre le au moins un emplacement du premier réseau et le au moins un emplacement du deuxième réseau.

5. Un procédé selon l'une quelconque des revendications 1 à 4, où les premières informations d'emplacement identifient une zone logique (25) du premier réseau (310) et les deuxièmes informations d'emplacement identifient une zone logique (35) du deuxième réseau (210), où ladite zone d'intersection (55) comprend une intersection entre la zone logique (25) du premier réseau et la zone logique (35) du deuxième réseau.

6. Un procédé selon la revendication 5, où chaque emplacement de recherche à l'intérieur du premier réseau (310) comprend une cellule (31-35, 35-40), et où la zone d'intersection (55) comprend uniquement les cellules (35, 36, 38, 39, 40) du premier réseau qui entrent en intersection avec la zone logique (35) du deuxième réseau.

7. Un procédé selon la revendication 5 ou 6, où la zone logique (35) du deuxième réseau (210) comprend au moins une cellule (35, 36, 38 - 45) du deuxième réseau, et où la zone d'intersection (55) comprend uniquement les cellules (35, 36, 38, 39, 40) du premier réseau (310) qui entrent en intersection avec toute cellule de la zone logique (35) du deuxième réseau.

8. Un procédé selon la revendication 6 ou 7, où chaque émetteur pour une cellule du premier réseau (310) est co-implanté avec un émetteur pour une cellule co-étendue correspondante du deuxième réseau (210), et où chaque émetteur pour la cellule co-étendue correspondante du deuxième réseau partage une antenne.

9. Un procédé selon l'une quelconque des revendications 1 à 8, où les premières informations d'emplacement identifient au moins un des éléments suivants :
un premier ensemble de cellules (31-33, 35-40) à l'intérieur du premier réseau (310) dans lequel un dispositif mobile (10, 500) est supposé se trouver,
une première zone logique (25) à l'intérieur du premier réseau (310) possédant un premier ensemble de cellules associé (31-33, 35-40) dans lequel un dispositif mobile (10, 500) est supposé se trouver, et
un identifiant d'une première zone géographique à l'intérieur du premier réseau (310) dans laquelle un dispositif mobile (10, 500) est supposé se trouver,
et où les deuxièmes informations d'emplacement identifient au moins un des éléments suivants :
un deuxième ensemble de cellules (35, 36, 38-45) à l'intérieur du deuxième réseau (210) dans lequel un dispositif mobile (10, 500) est supposé se trouver,
une deuxième zone logique à l'intérieur du deuxième réseau (210) possédant un deuxième ensemble de cellules associé dans lequel un dispositif mobile (10, 500) est supposé se trouver, et
un identifiant d'une deuxième zone géographique à l'intérieur du deuxième réseau dans laquelle un dispositif mobile (10, 500) est supposé se trouver.

10. Un procédé selon l'une quelconque des revendications 1 à 9, où le premier réseau (310) est un réseau d'interconnexion, le deuxième réseau (210) est un réseau de distribution, et où les premières informations d'emplacement comprennent un identifiant de zone d'emplacement identifiant une zone d'emplacement possédant un premier ensemble de cellules associé (31-33, 35-40) à l'intérieur du premier réseau dans lequel un dispositif mobile (10, 500) est supposé se trouver, et les deuxièmes informations d'emplacement comprennent un identifiant de zone de distribution identifiant une zone d'emplacement de distribution possédant un deuxième ensemble de cellules associé (35, 36, 38 - 45) dans lequel un dispositif mobile (10) est supposé se trouver.

11. Un procédé selon l'une quelconque des revendications 1 à 10 comprenant en outre au moins un des éléments suivants :
le premier réseau (310) interroge périodiquement le deuxième réseau (210) pour les deuxièmes informations d'emplacement,
le deuxième réseau (210) fournit périodiquement au premier réseau (310) les deuxièmes informations d'emplacement,
le deuxième réseau fournit au premier réseau les deuxièmes informations d'emplacement chaque fois qu'un dispositif mobile (10, 500) à rechercher franchit une limite d'une zone logique (35) du deuxième réseau, et
le premier réseau avant de transmettre la première recherche interroge le deuxième réseau pour les deuxièmes informations d'emplacement.

12. Un procédé selon l'une quelconque des revendications 1 à 11 comprenant en outre :
la comparaison des premières informations d'emplacement aux deuxièmes informations d'emplacement,
la génération d'informations d'emplacement d'intersection comprenant des emplacements d'intersection définis par les premières informations d'emplacement qui sont également des emplacements définis par les deuxièmes informations d'emplacement, et
la définition de la zone d'intersection (55) dans laquelle transmettre la première recherche comprenant des emplacements de recherche qui sont définis par les emplacements d'intersection.

13. Un procédé selon l'une quelconque des revendications 1 à 12, où ladite zone d'intersection (55) comprend une zone géographique définie par une intersection des zones géographiques connues respectives des deux réseaux (210, 310).

14. Un procédé selon l'une quelconque des revendications 1 à 12, où le premier réseau (310) et le deuxième réseau (210) comprennent une paire de réseaux, la paire étant sélectionnée dans un groupe de paires se composant de :
a) un réseau d'interconnexion (310) et un réseau de distribution (210),
b) un réseau de distribution (210) et un réseau CDMA, et
c) un réseau de données par paquets et un réseau d'appels vocaux.

15. Un procédé selon l'une quelconque des revendications 1 à 14, où l'opération de transmission de la première recherche comprend :
la transmission de la première recherche au deuxième réseau (210),
l'imbrication de la première recherche dans une deuxième recherche du deuxième réseau, et
la transmission de ladite deuxième recherche sur le deuxième réseau à ladite zone d'intersection (55).

16. Un procédé selon l'une quelconque des revendications 1 à 15 comprenant en outre, avant l'opération de transmission de la première recherche :
la transmission d'une demande d'écoute de la première recherche audit deuxième réseau (210), et
le relais sur le deuxième réseau de la demande d'écoute de la première recherche à ladite la zone d'intersection (55).

17. Un système de communications mobile (200) destiné à rechercher un dispositif mobile (10, 500), le système de communications mobile comprenant :
au moins deux réseaux (210, 310),
un système de commande de service destiné à envoyer une recherche sur un premier réseau (310) du système, et
un échangeur déterminateur de chevauchements inter-réseaux (232, 234, 332, 334) destiné à :
a) recevoir d'un deuxième réseau (210) du système des deuxièmes informations d'emplacement relatives à un emplacement du dispositif mobile (10, 500) dans le deuxième réseau (210), et
b) traiter les deuxièmes informations d'emplacement avec les premières informations d'emplacement relatives à un emplacement du dispositif mobile (10, 500) dans le premier réseau (310) de façon à générer des informations d'intersection,
où le système de commande de service est adapté de façon à envoyer la recherche à des emplacements de recherche en fonction des informations d'intersection.

18. Un système de communications mobile (200) selon la revendication 17 comprenant en outre :
un registre d'emplacements visités (220, 320) destiné à conserver en mémoire les premières informations d'emplacement,
où le système de commande de service est adapté de façon à récupérer les premières informations d'emplacement, et où l'échangeur déterminateur de chevauchements inter-réseaux comprend :
un échangeur de zones inter-réseaux (234, 334) destiné à recevoir les deuxièmes informations d'emplacement, et
un déterminateur de chevauchements de zones (232, 332) destiné à traiter les deuxièmes informations d'emplacement avec les premières informations d'emplacement de façon à générer les informations d'intersection, où les informations d'intersection comprennent des emplacements définis par les premières informations d'emplacement qui sont des emplacements également définis par les deuxièmes informations d'emplacement,
où les emplacements de recherche sont définis par les informations d'intersection.

19. Un système de communications mobile selon la revendication 18, où les premières informations d'emplacement comprennent des informations relatives à une première zone logique (25) du premier réseau, et les deuxièmes informations d'emplacement comprennent des informations relatives à une deuxième zone logique (35) du deuxième réseau, et où le déterminateur de chevauchements de zones est adapté de façon à générer les informations d'intersection en déterminant les cellules (35, 36, 38-40) d'une zone d'intersection (55) qui se trouvent à la fois à l'intérieur de la première zone logique (25) et de la deuxième zone logique (35), et où les informations d'intersection défissent les cellules (35, 36, 38-40) de la zone d'intersection (55), et où les emplacements de recherche sont co-étendus avec les cellules (35, 36, 38-40) de la zone d'intersection (55).

20. Un système de communications mobile selon l'une quelconque des revendications 17 à 19, où le deuxième réseau du système comprend :
un échangeur de zones inter-réseaux (234, 334) destiné à transmettre les deuxièmes informations d'emplacement du deuxième réseau à l'échangeur déterminateur de chevauchements inter-réseaux.
